# EUROPEAN PATENT APPLICATION

(11) **EP 4 625 280 A1**
(43) Date of publication of application: **01.10.2025**
(21) Application number: 22969592.9
(22) Date of filing: 28.12.2022
(51) Int. Cl.: G06Q 10/06

(54) **ASSET RISK ASSESSMENT METHOD AND APPARATUS, ELECTRONIC DEVICE, AND STORAGE MEDIUM**

(71) Applicant: Siemens Aktiengesellschaft, 80333 München (DE)
(72) Inventor: WAN, Shuo, Beijing 100082 (CN); LIU, Xi Feng, Beijing 100016 (CN)
(74) Representative: Isarpatent
(86) International application number: PCT/CN2022/142938
(87) International publication number: WO 2024/138440

(57) **Abstract**

Disclosed in embodiments of the present invention are an asset risk assessment method and apparatus, an electronic device, and a storage medium. The method comprises: determining a first index representing the vulnerability of an asset; determining a second index representing the severity of a security event that occurs for the asset; and on the basis of the first index and the second index, determining a third index representing the risk of the asset. The embodiments of the present invention quantitatively assess an asset risk on the basis of the vulnerability and the security event, and improves the assessment accuracy. Moreover, the embodiments of the present invention can also qualitatively assess the asset risk on the basis of the quantitative assessment result, and facilitates the implementation.

## Description

### TECHNICAL FIELD

The present invention relates to the field of information security technologies, and in particular, to an asset risk assessment method and apparatus, an electronic device, and a storage medium.

### BACKGROUND

Assessment of an asset risk is very important for a zero-trust solution and a security situation awareness platform. During the assessment of an asset risk, some qualitative methods are usually used. This has a subjective factor, leading to a poor assessment effect.

Many factors may affect the asset risk, such as a vulnerability, an exposed surface, and an attack possibility. For how to incorporate these factors into risk scoring, there is still a lack of available implementation methods. Therefore, it is currently difficult to assess the asset risk by using an objective quantification method.

### SUMMARY

Implementations of the present invention provide an asset risk assessment method and apparatus, an electronic device, and a storage medium.

An asset risk assessment method includes:
determining a first indicator representing a vulnerability of an asset;
determining a second indicator representing severity of a security event that has occurred for the asset; and
determining, based on the first indicator and the second indicator, a third indicator representing a risk of the asset.

Therefore, in the implementations of the present invention, an asset risk is quantitatively assessed based on vulnerability and a security event, thereby improving assessment accuracy.

In an exemplary implementation, the determining a first indicator representing a vulnerability of an asset includes:
determining a common vulnerability scoring system (CVSS) score of the asset;
performing a compliance check on the asset regarding security configuration, to determine a compliance ratio of the asset; and
determining the first indicator based on the compliance ratio and the CVSS score.

Therefore, the first indicator is determined comprehensively through the CVSS score and the compliance ratio, thereby improving accuracy of the first indicator.

In an exemplary implementation, the determining the first indicator based on the compliance ratio and the CVSS score includes:
determining a CVSS risk indicator of the asset based on the CVSS score;
determining a minimum value between the CVSS risk indicator and a first preset value as the first indicator when the compliance ratio is greater than or equal to a first threshold value;
determining a minimum value between the CVSS risk indicator and a second preset value, and determining a maximum value between the minimum value between the CVSS risk indicator and the second preset value and the first preset value as the first indicator when the compliance ratio is greater than or equal to a second threshold value and less than the first threshold value;
determining a minimum value between the CVSS risk indicator and the third preset value, and determining a maximum value between the minimum value between the CVSS risk indicator and the third preset value and the second preset value as the first indicator when the compliance ratio is greater than or equal to a third threshold value and less than the second threshold value; and
determining a minimum value between the CVSS risk indicator and a fourth preset value, and determining a maximum value between the minimum value between the CVSS risk indicator and the fourth preset value and the third preset value as the first indicator when the compliance ratio is less than the third threshold value,
where the first threshold value is greater than the second threshold value, the second threshold value is greater than the third threshold value, the first preset value is less than the second preset value, the second preset value is less than the third preset value, and the third preset value is less than the fourth preset value.

Therefore, the first indicator is constrained in sections through the compliance ratio, thereby improving accuracy of the first indicator.

In an exemplary implementation, the determining a CVSS risk indicator of the asset based on the CVSS score includes: determining a CVSS risk indicator CVSS_Risk_score_1 of the asset, where CVSS_Risk_score_1 = 2*Initial_Vulnerability_Score*(Sigmoid(h1*Σ(CVSS_Score)) - 0.5), where CVSS_Score is a CVSS score of each vulnerability; Σ is a summation symbol; Sigmoid is an S-shaped growth curve function; Initial_Vulnerability_Score is an adjustable first preset parameter; and h1 is an adjustable second preset parameter.

It may be learned that the CVSS risk indicator not only combines CVSS scores of all vulnerabilities, but also reflects adjusting effects of h1 and Initial_Vulnerability_Score, which has a better indicator value.

In an exemplary implementation, the determining a second indicator representing severity of a security event that has occurred for the asset includes:
determining a security event that has occurred for the asset, and an event level, an occurrence frequency, and a duration of the security event that has occurred;
determining, based on the event level, the occurrence frequency, and the duration, an integrity score of the security event that has occurred;
determining, based on the event level, the occurrence frequency, and the duration, a confidentiality score of the security event that has occurred;
determining, based on the event level, the occurrence frequency, and the duration, an availability score of the security event that has occurred; and
determining the second indicator based on the integrity score, the confidentiality score, and the availability score.

Therefore, in view of the event level, the occurrence frequency, and the duration, the integrity score, the confidentiality score, and the availability score are respectively calculated, thereby improving accuracy of the second indicator.

In an exemplary implementation, the method further includes:
creating a first virtual scene of the asset, where in the first virtual scene, the asset includes a first vulnerability having a first CVSS score and a first security event having an event level of an alert;
creating a second virtual scene of the asset, where in the second virtual scene, the asset includes a second vulnerability having a second CVSS score and a second security event having an event level of a warning, and the first CVSS score is greater than the second CVSS score;
determining a fourth indicator representing a risk of the asset in the first virtual scene;
determining a fifth indicator representing a risk of the asset in the second virtual scene; and
performing qualitative analysis on the third indicator based on the fourth indicator and the fifth indicator.

Therefore, a virtual scene is created to provide a condition for qualitative analysis, thereby facilitating implementation.

In an exemplary implementation, the performing qualitative analysis on the third indicator based on the fourth indicator and the fifth indicator includes:
determining that the risk is rated as high-level when the third indicator is greater than or equal to the fourth indicator;
determining that the risk is rated as low-level when the third indicator is less than or equal to the fifth indicator; and
determining that the risk is rated as medium-level when the third indicator is greater than the fifth indicator and less than the fourth indicator.

It may be learned that the qualitative analysis may be conveniently performed.

An asset risk assessment apparatus includes:
a first determining module, configured to determine a first indicator representing a vulnerability of an asset;
a second determining module, configured to determine a second indicator representing severity of a security event that has occurred for the asset; and
a third determining module, configured to determine, based on the first indicator and the second indicator, a third indicator representing a risk of the asset.

Therefore, in the implementations of the present invention, an asset risk is quantitatively assessed based on vulnerability and a security event, thereby improving assessment accuracy.

In an exemplary implementation, the first determining module is configured to: determine a CVSS score of the asset; perform a compliance check on the asset regarding security configuration, to determine a compliance ratio of the asset; and determine the first indicator based on the compliance ratio and the CVSS score.

Therefore, the first indicator is determined comprehensively through the CVSS score and the compliance ratio, thereby improving accuracy of the first indicator.

In an exemplary implementation, the first determining module is configured to: determine a CVSS risk indicator of the asset based on the CVSS score; determine a minimum value between the CVSS risk indicator and a first preset value as the first indicator when the compliance ratio is greater than or equal to a first threshold value; determine a minimum value between the CVSS risk indicator and a second preset value, and determine a maximum value between the minimum value between the CVSS risk indicator and the second preset value and the first preset value as the first indicator when the compliance ratio is greater than or equal to a second threshold value and less than the first threshold value; determine a minimum value between the CVSS risk indicator and the third preset value, and determine a maximum value between the minimum value between the CVSS risk indicator and the third preset value and the second preset value as the first indicator when the compliance ratio is greater than or equal to a third threshold value and less than the second threshold value; and determine a minimum value between the CVSS risk indicator and a fourth preset value, and determine a maximum value between the minimum value between the CVSS risk indicator and the fourth preset value and the third preset value as the first indicator when the compliance ratio is less than the third threshold value, where the first threshold value is greater than the second threshold value, the second threshold value is greater than the third threshold value, the first preset value is less than the second preset value, the second preset value is less than the third preset value, and the third preset value is less than the fourth preset value.

Therefore, the first indicator is constrained in sections through the compliance ratio, thereby improving accuracy of the first indicator.

In an exemplary implementation, the second determining module is configured to: determine a security event that has occurred for the asset, and an event level, an occurrence frequency, and a duration of the security event that has occurred; determine, based on the event level, the occurrence frequency, and the duration, an integrity score of the security event that has occurred; determine, based on the event level, the occurrence frequency, and the duration, a confidentiality score of the security event that has occurred; determine, based on the event level, the occurrence frequency, and the duration, an availability score of the security event that has occurred; and determine the second indicator based on the integrity score, the confidentiality score, and the availability score.

Therefore, in view of the event level, the occurrence frequency, and the duration, the integrity score, the confidentiality score, and the availability score are respectively calculated, thereby improving accuracy of the second indicator.

In an exemplary implementation, the apparatus further includes:
a qualitative analysis module, configured to: create a first virtual scene of the asset, where in the first virtual scene, the asset includes a first vulnerability having a first CVSS score and a first security event having an event level of an alert; create a second virtual scene of the asset, where in the second virtual scene, the asset includes a second vulnerability having a second CVSS score and a second security event having an event level of a warning, and the first CVSS score is greater than the second CVSS score; determine a fourth indicator representing a risk of the asset in the first virtual scene; determine a fifth indicator representing a risk of the asset in the second virtual scene; and perform qualitative analysis on the third indicator based on the fourth indicator and the fifth indicator.

Therefore, a virtual scene is created to provide a condition for qualitative analysis, thereby facilitating implementation.

In an exemplary implementation, the qualitative analysis module is configured to: determine that the risk is rated as high-level when the third indicator is greater than or equal to the fourth indicator; determine that the risk is rated as low-level when the third indicator is less than or equal to the fifth indicator; and determine that the risk is rated as medium-level when the third indicator is greater than the fifth indicator and less than the fourth indicator.

It may be learned that the qualitative analysis may be conveniently performed.

An electronic device, including:
a processor; and
a memory, configured to store an executable instruction of the processor.

The processor is configured to read the executable instruction from the memory, and execute the executable instruction to implement the asset risk assessment method according to any of the foregoing implementations.

A computer-readable storage medium is provided, having a computer instruction stored therein, the computer instruction, when executed by a processor, implementing the asset risk assessment method according to any of the foregoing implementations.

A computer program product is provided, including a computer program, the computer program, when executed by a processor, implementing the asset risk assessment method according to any of the foregoing implementations.

### BRIEF DESCRIPTION OF THE DRAWINGS

Preferred embodiments of the present invention are described in detail below with reference to the accompanying drawings, so that a person of ordinary skill in the art better understands the above and other features and advantages of the present invention. In the accompanying drawings:
FIG. 1 is an exemplary schematic diagram of an asset risk assessment method according to an implementation of the present invention.
FIG. 2 is an exemplary schematic diagram of an influence factor of an asset risk according to an implementation of the present invention.
FIG. 3 is a schematic diagram of a CVSS risk indicator function according to an implementation of the present invention.
FIG. 4 is an exemplary schematic diagram of determining a first indicator according to an implementation of the present invention.
FIG. 5 is an exemplary structural diagram of an asset risk assessment apparatus according to an implementation of the present invention.
FIG. 6 is a structure diagram of an electronic device according to an implementation of the present invention.

Reference numerals are as follows:

| Reference numerals | Meaning |
|---|---|
| 101-103 | Step |
| 10 | Asset risk |
| 11 | Vulnerability |
| 21 | Security event |
| 31 | Compliance ratio |
| 32 | CVSS score |
| 33 | Event level |
| 34 | Occurrence frequency |
| 35 | Duration |
| 36 | Integrity score |
| 37 | Confidentiality score |
| 38 | Availability score |
| 41 | First curve of the first indicator |
| 42 | Second curve of the first indicator |
| 43 | Third curve of the first indicator |
| 44 | Fourth curve of the first indicator |
| 500 | Apparatus for assessing an asset risk |
| 501 | First determining module |
| 502 | Second determining module |
| 503 | Third determining module |
| 504 | Qualitative analysis module |
| 600 | Electronic device |
| 601 | Processor |
| 602 | Memory |

### DETAILED DESCRIPTION

In order to make the purposes, technical solutions, and advantages of the present invention clearer, the present invention is further described in detail through embodiments below.

For concise and intuitive descriptions, solutions of the present invention are described below through several representative implementations. A large number of details in the implementations are merely used to help understand the solutions of the present invention. However, obviously, the implementation of the technical solutions of the present invention may not be limited to these details. To avoid unnecessarily blurring the solutions of the present invention, some implementations are not described in detail, but only a framework is provided. In the following, "include" means "include, but is not limited to", and "based on" means "at least based on, but not limited to only based on". Because of Chinese language habits, the following does not particularly specify a number of components, which means that the component may be one or more, or may be understood as at least one.

In an implementation of the present invention, a risk score of an asset is calculated based on several objective factors (for example, from vulnerabilities and security events). For example, the objective factors may include: an asset compliance ratio, a CVSS score, an integrity score, a confidentiality score, and an availability score, thereby covering numerous risk situations of an asset. Therefore, in the implementations of the present invention, the asset risk score may be accurately quantified based on numerous objective factors.

First, in the implementations of the present invention, an asset risk score is calculated through two main objective factors.
(1) Vulnerability: It represents a vulnerability of an asset. The vulnerability is a characteristic of the asset, and more vulnerabilities indicate stronger weakness and a larger attack possibility.
(2) Security event: It is a threat or an attack that occurs on an asset. If an asset has more vulnerabilities, it usually does not mean that more attacks occur on the asset. If the asset is not exposed widely or well protected, a large quantity of security events do not occur. The security event may usually come from a standard IDS or a security situation awareness platform, and therefore is more objective.

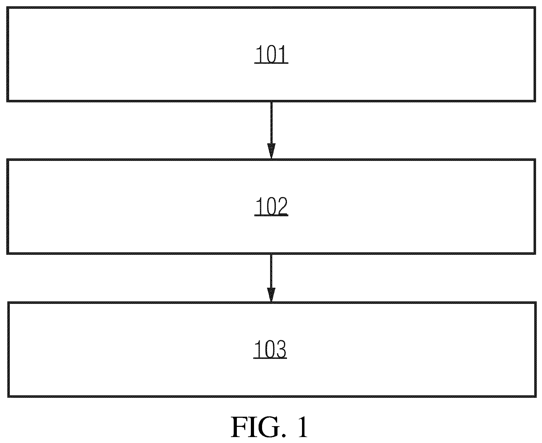

FIG. 1 is an exemplary schematic diagram of an asset risk assessment method according to an implementation of the present invention. As shown in FIG. 1, the method includes the following steps.

Step 101: Determine a first indicator representing a vulnerability of an asset.

Herein, the asset may be a machine, machinery, a transportation tool, and other devices, appliances, tools, and the like related to production and operation. For example, the asset may be an IT device (such as a notebook computer, a desktop computer, a router, or a switch) in the field of information technology (IT). The asset may further be an OT device (for example, field SCADA, a generator, a pipeline, a fan, a programmable logic controller (PLC), a remote processing unit (RPU), an industrial robot, or an industrial personal computer) in the field of operation technology, or a fusion device in the field of IOT.

Herein, the determining a first indicator representing a vulnerability of an asset specifically includes: determining a CVSS score of the asset; performing a compliance check on the asset regarding security configuration, to determine a compliance ratio of the asset; and determining the first indicator based on the compliance ratio and the CVSS score.

Herein, the CVSS provides a method for capturing a main feature of a vulnerability of an asset and generating a numerical score reflecting the severity of the asset. The CVSS attempts to assign a severity score to a vulnerability, so that a responder may prioritize responses and resources based on threats. A range of the CVSS score is usually 0 to 10, where 10 represents the most severe. The CVSS is usually maintained by FIRST, and a CVSS score may be generated through a vulnerability scanner.

In addition, a compliance check may be performed on security-related configuration based on some specific entities (such as companies) or industry standards, to obtain a compliance ratio of the asset. In an implementation of the present invention, the compliance ratio is a result of the compliance check. The compliance ratio may come from a respective compliance check tool. For example, assuming that 100 items of the compliance check are performed, and the asset complies with 98 items of the compliance check, the compliance ratio of the asset is 98%.

For example, the compliance check may include:
(1). Check whether password strength is compliant.
(2). Check whether the patch is complete.
(3). Check whether a version of an operating system meets a standard requirement.

Typical examples of the CVSS score and the compliance check are exemplarily described above. A person skilled in the art can realize that the description is merely exemplary and is not intended to limit the protection scope of the implementations of the present invention.

In an implementation, the determining the first indicator based on the compliance ratio and the CVSS score includes the following steps.
(1). Determine a CVSS risk indicator of the asset based on the CVSS score.

The CVSS risk indicator of the asset may be implemented as an indicator related to a sum of CVSS scores of vulnerabilities.

In an implementation, the determining a CVSS risk indicator of the asset based on the CVSS score includes: determining a CVSS risk indicator CVSS_Risk_score_1 of the asset,
where CVSS_Risk_score_1 = 2*Initial_Vulnerability_Score*(Sigmoid(h1*Σ(CVSS_Score)) - 0.5,
where CVSS_Score is a CVSS score of each vulnerability; Σ is a summation symbol; Sigmoid is an S-shaped growth curve function; Initial_Vulnerability_Score is an original score of the vulnerability, and is implemented as an adjustable first preset parameter; and h1 is an adjustable second preset parameter. For example, assuming that an asset has 5 vulnerabilities, respective CVSS scores of the 5 vulnerabilities are obtained first (that is, 5 CVSS_Score), then the 5 CVSS scores are summed to obtain Σ (CVSS_Score), and CVSS_Risk_score_1 may be obtained based on the foregoing equation.

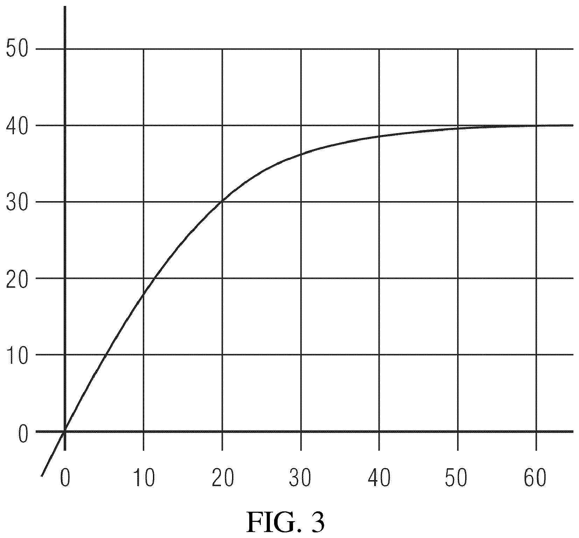

FIG. 3 is a schematic diagram of a CVSS risk indicator function according to an implementation of the present invention. CVSS scores of various vulnerabilities corresponding to assets are accumulated, and accumulated results are multiplied by a hyper-parameter h1 as inputs of an S-shaped function. Because the accumulated CVSS score may be very large, the S-shaped function is used herein to compress the large score into a relatively small score, which may be compared with other scores. More importantly, CVSS scores of all assets may be distributed in a gradient from 0 to 40. It may be learned from FIG. 3 that the entire equation forms an increasing curve on an X-Y coordinate system. A hyper-parameter h1 is applied in the equation, which causes the curve to move upward along a y-axis from 0 to 40. An appropriate value of h1 may cause the curve to move smoothly, thereby avoiding a situation of imbalance.

(2). Determine a minimum value between the CVSS risk indicator and a first preset value as the first indicator when the compliance ratio is greater than or equal to a first threshold value; determine a minimum value between the CVSS risk indicator and a second preset value, and determine a maximum value between the minimum value between the CVSS risk indicator and the second preset value and the first preset value as the first indicator when the compliance ratio is greater than or equal to a second threshold value and less than the first threshold value; determine a minimum value between the CVSS risk indicator and the third preset value, and determine a maximum value between the minimum value between the CVSS risk indicator and the third preset value and the second preset value as the first indicator when the compliance ratio is greater than or equal to a third threshold value and less than the second threshold value; and determine a minimum value between the CVSS risk indicator and a fourth preset value, and determine a maximum value between the minimum value between the CVSS risk indicator and the fourth preset value and the third preset value as the first indicator when the compliance ratio is less than the third threshold value, where the first threshold value is greater than the second threshold value, the second threshold value is greater than the third threshold value, the first preset value is less than the second preset value, the second preset value is less than the third preset value, and the third preset value is less than the fourth preset value. Therefore, the first indicator is constrained in sections through the compliance ratio, thereby improving accuracy of the first indicator.

For example: the first preset value may be 20, the second preset value may be 24, the third preset value may be 32, the fourth preset value may be 40, the first threshold value may be 90%, the second threshold value may be 75%, and the third threshold value may be 50%.

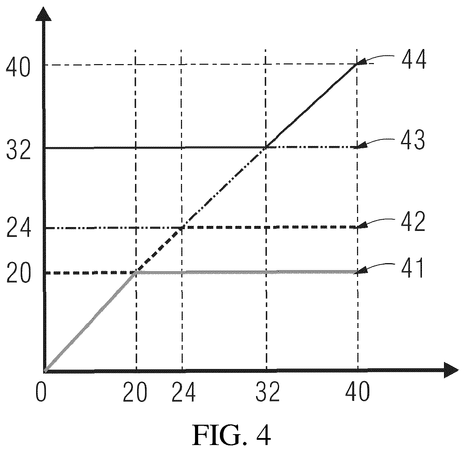

FIG. 4 is an exemplary schematic diagram of determining a first indicator according to an implementation of the present invention. In FIG. 4, an abscissa X is CVSS_Risk_score_1, and an ordinate Y is a first indicator. A first curve 41 of the first indicator is: Y = min (20, X). A second curve 42 of the first indicator is: Y = max (20, min (24, X)). A third curve 43 of the first indicator is: Y = max (24, min (32, X)). A fourth curve 44 of the first indicator is: Y = max (32, min (40, X)). X is CVSS_Risk_score_1, where max () means taking a function of a maximum value, and min () means taking a function of a minimum value.

Step 102: Determine a second indicator representing severity of a security event that has occurred for the asset.

For example, the security event may be any event that attempts to change an information system security status (for example, change an access control measure, change a security level, or change a user password) of an asset.

CIA (that is, integrity, confidentiality, and availability) in information security is very critical. C: Confidentiality is to ensure that information is not disclosed to an unauthorized user or entity during storage, use, and transmission. I: Integrity is to ensure that information is not tampered with without authorization during storage, use, and transmission, prevent an authorized user or entity from modifying information improperly, and maintain internal and external consistency of the information. A: Availability is to ensure that normal use of information and resources by an authorized user or entity is not abnormally rejected, and allow the authorized user or entity to reliably and timely access the information and resources.

For security event factors, three aspects need to be considered: an event severity level, an occurrence frequency, and an event duration. In the implementations of the present invention, CIA attributes of security events are counted: an integrity score, a confidentiality score, and an availability score. The integrity score, the confidentiality score, and the availability score may be determined with reference to some local and global risk assessment standards, such as ISO 27005 and GBT-20984.

In an implementation, a security event that has occurred for the asset, and an event level, an occurrence frequency, and a duration of the security event that has occurred are determined; an integrity score of the security event that has occurred is determined based on the event level, the occurrence frequency, and the duration; a confidentiality score of the security event that has occurred is determined based on the event level, the occurrence frequency, and the duration; an availability score of the security event that has occurred is determined based on the event level, the occurrence frequency, and the duration; and the second indicator is determined based on the integrity score, the confidentiality score, and the availability score. In order of severity from mild to severe, the event level may successively include: a general event (Event), a warning (Warning), an alert (Alert), and so on.

For example:
calculation equations of the integrity score Integrity_Risk_Score, the confidentiality score Confidentiality_Risk_Score, and the availability score Availability_Risk_Score are as follows: Integrity_Risk_Score = Initial_Integrity_Score-2 * Initial_Integrity_Score * (Sigmoid(h2 * Σ(weight-bias-per-event)) - 0.5); Confidentiality_Risk_Score = Initial_Confidentiality_Score-2 * Initial_Confidentiality_Score * (Sigmoid(h2 * Σ(weight-bias-per-event)) - 0.5) ; Availability_Risk_Score = Initial_Availability_Score-2 * Initial_Availability_Score * (Sigmoid(h2 * Σ(weight-bias-per-event)) - 0.5); and weight-bias-per-event = Event type value * Frequency Weight * Duration Weight + History Bias.

Security_event_Risk_Score, that is, the second indicator is obtained by summing the Integrity_Risk_Score, the Confidentiality_Risk_Score, and the Availability_Risk_Score. By default: Initial_Integrity_Score may be 15; Initial_Confidentiality_Score may be 15; and Initial_Availability_Score may be 30 (for example, it is considered that availability is more important). Preferably, the Initial_Integrity_Score, the Initial_Confidentiality_Score, and the Initial_Availability_Score may be adjustable.

Event type value is a parameter for describing an event level: (1). Assign a value of 2 when the event level is a notification event; assign a value of 5 when the event level is a warning; and assign a value of 10 when the event level is an alert. A more critical event indicates a higher score of the Event type value. Frequency Weight is a parameter for describing an occurrence frequency of an event: a higher frequency of occurrence of the event indicates a higher score of the Frequency Weight. Duration Weight is a parameter for describing a duration of an event: a longer duration indicates a higher score of the Duration Weight. History Bias indicates whether the event has ever occurred, and when an event of this type does not occur, a value of 0 is assigned; after the event is reviewed (due to factors such as misinformation) and then degraded, a value of 2 is assigned; and after the event is reviewed and upgraded, a value of 4 is assigned. h2 is an adjustable preset parameter.

For example, it is assumed that a security event A, a security event B, and a security event C occur on an asset within a preset time. First, a weight-bias-per-event of the security event A is calculated based on a level of the security event A, an occurrence frequency of the security event A, and a duration of the security event A. Similarly, a weight-bias-per-event of the security event B and a weight-bias-per-event of the security event C are calculated. Then, the weight-bias-per-event of the security event A, the weight-bias-per-event of the security event B, and the weight-bias-per-event of the security event C are summed to obtain Σ (weight-bias-per-event). An integrity score Integrity_Risk_Score, a confidentiality score Confidentiality_Risk_Score, and an availability score Availability_Risk_Score of the asset for all security events are respectively calculated based on the Σ (weight-bias-per-event), and then the integrity score Integrity_Risk_Score, the confidentiality score Confidentiality _Risk_Score, and the availability score Availability_Risk_Score are summed to obtain Integrity_Risk_Score, that is, a second indicator of the asset.

Typical examples of determining the second indicator are exemplarily described above through specific numerical values. A person skilled in the art can realize that the description is merely exemplary and is not intended to limit the protection scope of the implementations of the present invention.

Step 103: Determine, based on the first indicator and the second indicator, a third indicator representing a risk of the asset.

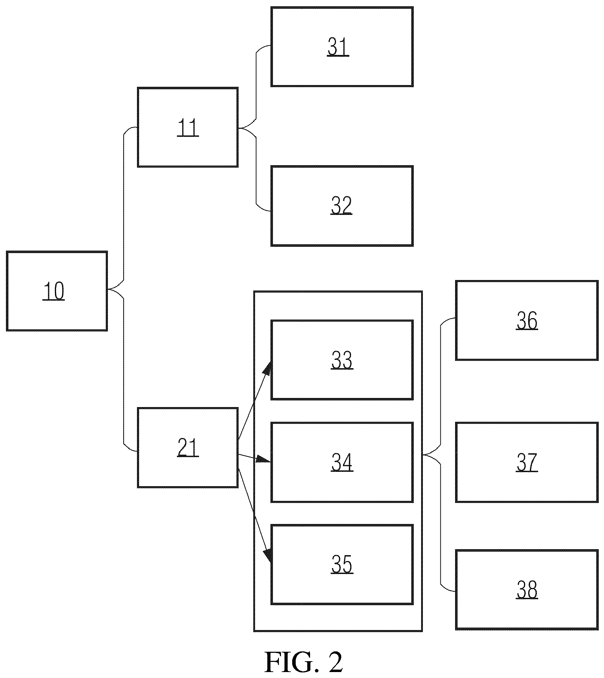

FIG. 2 is an exemplary schematic diagram of an influence factor of an asset risk according to an implementation of the present invention. In FIG. 2, an asset risk 10 may be obtained from a vulnerability 11 and a security event 21. The vulnerability 11 includes a compliance ratio 31 and a CVSS score 32. The security event 21 includes an integrity score 36, a confidentiality score 37, and an availability score 38 of the security event. In addition, the integrity score 36, the confidentiality score 37, and the availability score 38 are respectively limited by an event level 33, an occurrence frequency 34, and a duration 35.

In an implementation, the method further includes: creating a first virtual scene of the asset, where in the first virtual scene, the asset includes a first vulnerability having a first CVSS score and a first security event having an event level of alert; creating a second virtual scene of the asset, where in the second virtual scene, the asset includes a second vulnerability having a second CVSS score and a second security event having an event level of a warning, and the first CVSS score is greater than the second CVSS score; determining a fourth indicator representing a risk of the asset in the first virtual scene; determining a fifth indicator representing a risk of the asset in the second virtual scene; and performing qualitative analysis on the third indicator based on the fourth indicator and the fifth indicator. Therefore, a virtual scene is created to provide a condition for qualitative analysis, thereby facilitating implementation.

Through the process shown in FIG. 1, a quantized third indicator may be obtained. During practical use, risk scores usually need to be classified into three levels: low, medium, and high. Assuming that a score range of the third indicator is from 0 to 100, the risk score is dynamic due to modification of parameters such as h1 and h2. Regardless of how the parameter is modified, to correctly classify the scores, two virtual scenes of the asset may be inserted, which respectively represent a bottom line of a medium-risk rating area and another bottom line of a high-risk rating area. For example, for the bottom line of the high-risk rating area, a vulnerability whose severity is "high" and whose CVSS score is relatively high (for example, 7.0) is virtualized, and a security event of an "alert" type is inserted; and for the bottom line of the medium-risk rating area, a vulnerability whose severity is "medium" and whose CVSS score is relatively low (for example, 4.0) is virtualized, and a security event of a "warning" type is inserted.

In an implementation, the performing qualitative analysis on the third indicator based on the fourth indicator and the fifth indicator includes: determining that the risk is rated as high-level when the third indicator is greater than or equal to the fourth indicator; determining that the risk is rated as low-level when the third indicator is less than or equal to the fifth indicator; and determining that the risk is rated as medium-level when the third indicator is greater than the fifth indicator and less than the fourth indicator. It may be learned that in the implementations of the present invention, the asset risk may be further qualitatively assessed based on a quantitative assessment result, thereby facilitating implementation.

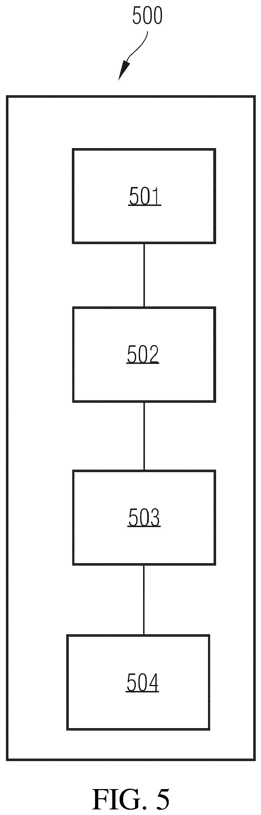

FIG. 5 is an exemplary structural diagram of an asset risk assessment apparatus according to an implementation of the present invention. As shown in FIG. 5, an asset risk assessment apparatus 500 includes:
a first determining module 501, configured to determine a first indicator representing a vulnerability of an asset;
a second determining module 502, configured to determine a second indicator representing severity of a security event that has occurred for the asset; and
a third determining module 503, configured to determine, based on the first indicator and the second indicator, a third indicator representing a risk of the asset.

In an implementation, the first determining module 501 is configured to: determine a CVSS score of the asset; perform a compliance check on the asset regarding security configuration, to determine a compliance ratio of the asset; and determine the first indicator based on the compliance ratio and the CVSS score.

In an implementation, the first determining module 501 is configured to: determine a CVSS risk indicator of the asset based on the CVSS score; determine a minimum value between the CVSS risk indicator and a first preset value as the first indicator when the compliance ratio is greater than or equal to a first threshold value; determine a minimum value between the CVSS risk indicator and a second preset value, and determine a maximum value between the minimum value between the CVSS risk indicator and the second preset value and the first preset value as the first indicator when the compliance ratio is greater than or equal to a second threshold value and less than the first threshold value; determine a minimum value between the CVSS risk indicator and the third preset value, and determine a maximum value between the minimum value between the CVSS risk indicator and the third preset value and the second preset value as the first indicator when the compliance ratio is greater than or equal to a third threshold value and less than the second threshold value; and determine a minimum value between the CVSS risk indicator and a fourth preset value, and determine a maximum value between the minimum value between the CVSS risk indicator and the fourth preset value and the third preset value as the first indicator when the compliance ratio is less than the third threshold value, where the first threshold value is greater than the second threshold value, the second threshold value is greater than the third threshold value, the first preset value is less than the second preset value, the second preset value is less than the third preset value, and the third preset value is less than the fourth preset value.

In an implementation, the second determining module 502 is configured to: determine a security event that has occurred for the asset, and an event level, an occurrence frequency, and a duration of the security event that has occurred; determine, based on the event level, the occurrence frequency, and the duration, an integrity score of the security event that has occurred; determine, based on the event level, the occurrence frequency, and the duration, a confidentiality score of the security event that has occurred; determine, based on the event level, the occurrence frequency, and the duration, an availability score of the security event that has occurred; and determine the second indicator based on the integrity score, the confidentiality score, and the availability score.

In an implementation, the apparatus further includes a qualitative analysis module 504, configured to: create a first virtual scene of the asset, where in the first virtual scene, the asset includes a first vulnerability having a first CVSS score and a first security event having an event level of an alert; create a second virtual scene of the asset, where in the second virtual scene, the asset includes a second vulnerability having a second CVSS score and a second security event having an event level of a warning, and the first CVSS score is greater than the second CVSS score; determine a fourth indicator representing a risk of the asset in the first virtual scene; determine a fifth indicator representing a risk of the asset in the second virtual scene; and perform qualitative analysis on the third indicator based on the fourth indicator and the fifth indicator.

In an implementation, the qualitative analysis module 504 is configured to: determine that the risk is rated as high-level when the third indicator is greater than or equal to the fourth indicator; determine that the risk is rated as low-level when the third indicator is less than or equal to the fifth indicator; and determine that the risk is rated as medium-level when the third indicator is greater than the fifth indicator and less than the fourth indicator.

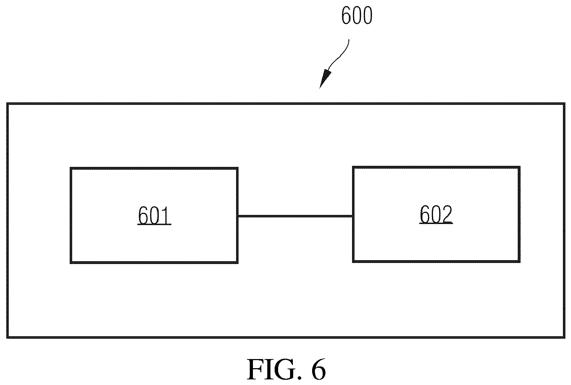

An implementation of the present invention further provides an electronic device having a processor-memory architecture. FIG. 6 is a structure diagram of an electronic device according to an implementation of the present invention.

As shown in FIG. 6, an electronic device 600 includes a processor 601, a memory 602, and a computer program stored in the memory 602 and executable in the processor 601. The computer program, when executed by the processor 601, implements the asset risk assessment method according to any of the foregoing implementations. The memory 602 may be specifically implemented as a plurality of storage media such as an electrically erasable programmable read-only memory (EEPROM), a flash memory, and a programmable read-only memory (PROM). The processor 601 may be implemented to include one or more central processing units or one or more field-programmable gate arrays. The field-programmable gate array integrates one or more central processing unit cores. Specifically, the central processing unit or the central processing unit core may be implemented as a CPU, an MCU, a DSP, or the like.

It is to be noted that not all steps and modules in the foregoing processes and structure diagrams are necessary, and some steps or modules may be omitted based on actual needs. An execution sequence of the steps is not fixed and may be adjusted as required. Division of the modules is merely functional division for ease of description. During actual implementation, functions of one module may be implemented by a plurality of modules, and functions of the plurality of modules may be implemented by the same module. The modules may be located in the same device, or may be located in different devices.

Hardware modules in the implementations may be implemented in a mechanic manner or an electronic manner. For example, a hardware module may include a specially designed permanent circuit or a logic device (for example, an application-specific processor such as an FPGA or an ASIC) to complete a specific operation. The hardware module may further include a programmable logic device or circuit (for example, including a universal processor or another programmable processor) temporarily configured by software to perform a specific operation. Whether the hardware module is specifically implemented in the mechanical manner, through the application-specific permanent circuit, or through the temporarily configured circuit (such as configured by software) may be decided in consideration of costs and time.

The above description is merely preferred implementations of the present invention, and is not intended to limit the protection scope of the present invention. Any modification, equivalent replacement, improvement, or the like made within the spirit and principle of the present invention shall fall within the protection scope of the present invention.

## Claims

1. An asset risk assessment method, comprising:
determining (101) a first indicator representing a vulnerability of an asset;
determining (102) a second indicator representing severity of a security event that has occurred for the asset; and
determining (103), based on the first indicator and the second indicator, a third indicator representing a risk of the asset.

2. The method according to claim 1, wherein the determining (101) a first indicator representing a vulnerability of an asset comprises:
determining a common vulnerability scoring system CVSS score of the asset;
performing a compliance check on the asset regarding security configuration, to determine a compliance ratio of the asset; and
determining the first indicator based on the compliance ratio and the CVSS score.

3. The method according to claim 1, wherein the determining the first indicator based on the compliance ratio and the CVSS score comprises:
determining a CVSS risk indicator of the asset based on the CVSS score;
determining a minimum value between the CVSS risk indicator and a first preset value as the first indicator when the compliance ratio is greater than or equal to a first threshold value;
determining a minimum value between the CVSS risk indicator and a second preset value, and determining a maximum value between the minimum value between the CVSS risk indicator and the second preset value and the first preset value as the first indicator when the compliance ratio is greater than or equal to a second threshold value and less than the first threshold value;
determining a minimum value between the CVSS risk indicator and the third preset value, and determining a maximum value between the minimum value between the CVSS risk indicator and the third preset value and the second preset value as the first indicator when the compliance ratio is greater than or equal to a third threshold value and less than the second threshold value; and
determining a minimum value between the CVSS risk indicator and a fourth preset value, and determining a maximum value between the minimum value between the CVSS risk indicator and the fourth preset value and the third preset value as the first indicator when the compliance ratio is less than the third threshold value,
wherein the first threshold value is greater than the second threshold value, the second threshold value is greater than the third threshold value, the first preset value is less than the second preset value, the second preset value is less than the third preset value, and the third preset value is less than the fourth preset value.

4. The method according to claim 3, wherein the determining a CVSS risk indicator of the asset based on the CVSS score comprises:
determining a CVSS risk indicator CVSS_Risk_score_1 of the asset,
wherein CVSS_Risk_score_1 = 2 * Initial_Vulnerability_Score * (Sigmoid(h1 * Σ(CVSS_Score)) - 0.5),
wherein CVSS_Score is a CVSS score of each vulnerability; Σ is a summation symbol; Sigmoid is an S-shaped growth curve function; Initial_Vulnerability_Score is an adjustable first preset parameter; and h1 is an adjustable second preset parameter.

5. The method according to claim 1, wherein the determining (102) a second indicator representing severity of a security event that has occurred for the asset comprises:
determining a security event that has occurred for the asset, and an event level, an occurrence frequency, and a duration of the security event that has occurred;
determining, based on the event level, the occurrence frequency, and the duration, an integrity score of the security event that has occurred;
determining, based on the event level, the occurrence frequency, and the duration, a confidentiality score of the security event that has occurred;
determining, based on the event level, the occurrence frequency, and the duration, an availability score of the security event that has occurred; and
determining the second indicator based on the integrity score, the confidentiality score, and the availability score.

6. The method according to any of claims 1 to 5, further comprising:
creating a first virtual scene of the asset, wherein in the first virtual scene, the asset comprises a first vulnerability having a first CVSS score and a first security event having an event level of an alert;
creating a second virtual scene of the asset, wherein in the second virtual scene, the asset comprises a second vulnerability having a second CVSS score and a second security event having an event level of a warning, and the first CVSS score is greater than the second CVSS score;
determining a fourth indicator representing a risk of the asset in the first virtual scene;
determining a fifth indicator representing a risk of the asset in the second virtual scene; and
performing qualitative analysis on the third indicator based on the fourth indicator and the fifth indicator.

7. The method according to claim 6, wherein the performing qualitative analysis on the third indicator based on the fourth indicator and the fifth indicator comprises:
determining that the risk is rated as high-level when the third indicator is greater than or equal to the fourth indicator;
determining that the risk is rated as low-level when the third indicator is less than or equal to the fifth indicator; and
determining that the risk is rated as medium-level when the third indicator is greater than the fifth indicator and less than the fourth indicator.

8. An asset risk assessment apparatus, comprising:
a first determining module (501), configured to determine a first indicator representing a vulnerability of an asset;
a second determining module (502), configured to determine a second indicator representing severity of a security event that has occurred for the asset; and
a third determining module (503), configured to determine, based on the first indicator and the second indicator, a third indicator representing a risk of the asset.

9. The apparatus according to claim 8, wherein
the first determining module (501) is configured to determine a CVSS score of the asset; perform a compliance check on the asset regarding security configuration, to determine a compliance ratio of the asset; and determine the first indicator based on the compliance ratio and the CVSS score.

10. The apparatus according to claim 8, wherein
the first determining module (501) is configured to: determine a CVSS risk indicator of the asset based on the CVSS score; determine a minimum value between the CVSS risk indicator and a first preset value as the first indicator when the compliance ratio is greater than or equal to a first threshold value; determine a minimum value between the CVSS risk indicator and a second preset value, and determine a maximum value between the minimum value between the CVSS risk indicator and the second preset value and the first preset value as the first indicator when the compliance ratio is greater than or equal to a second threshold value and less than the first threshold value; determine a minimum value between the CVSS risk indicator and the third preset value, and determine a maximum value between the minimum value between the CVSS risk indicator and the third preset value and the second preset value as the first indicator when the compliance ratio is greater than or equal to a third threshold value and less than the second threshold value; and determine a minimum value between the CVSS risk indicator and a fourth preset value, and determine a maximum value between the minimum value between the CVSS risk indicator and the fourth preset value and the third preset value as the first indicator when the compliance ratio is less than the third threshold value, wherein the first threshold value is greater than the second threshold value, the second threshold value is greater than the third threshold value, the first preset value is less than the second preset value, the second preset value is less than the third preset value, and the third preset value is less than the fourth preset value.

11. The apparatus according to claim 8, wherein
the second determining module (502) is configured to: determine a security event that has occurred for the asset, and an event level, an occurrence frequency, and a duration of the security event that has occurred; determine, based on the event level, the occurrence frequency, and the duration, an integrity score of the security event that has occurred; determine, based on the event level, the occurrence frequency, and the duration, a confidentiality score of the security event that has occurred; determine, based on the event level, the occurrence frequency, and the duration, an availability score of the security event that has occurred; and determine the second indicator based on the integrity score, the confidentiality score, and the availability score.

12. The apparatus according to any of claims 8 to 11, further comprising:
a qualitative analysis module (504), configured to: create a first virtual scene of the asset, wherein in the first virtual scene, the asset comprises a first vulnerability having a first CVSS score and a first security event having an event level of an alert; create a second virtual scene of the asset, wherein in the second virtual scene, the asset comprises a second vulnerability having a second CVSS score and a second security event having an event level of a warning, and the first CVSS score is greater than the second CVSS score; determine a fourth indicator representing a risk of the asset in the first virtual scene; determine a fifth indicator representing a risk of the asset in the second virtual scene; and perform qualitative analysis on the third indicator based on the fourth indicator and the fifth indicator.

13. The apparatus according to claim 12, wherein
the qualitative analysis module (504) is configured to: determine that the risk is rated as high-level when the third indicator is greater than or equal to the fourth indicator; determine that the risk is rated as low-level when the third indicator is less than or equal to the fifth indicator; and determine that the risk is rated as medium-level when the third indicator is greater than the fifth indicator and less than the fourth indicator.

14. An electronic device, comprising:
a processor (601); and
a memory (602), configured to store an executable instruction of the processor (601), wherein
the processor (601) is configured to read the executable instruction from the memory (602), and execute the executable instruction to implement the asset risk assessment method according to any of claims 1 to 7.

15. A computer-readable storage medium, having a computer instruction stored therein, wherein the computer instruction, when executed by a processor, implements the asset risk assessment method according to any of claims 1 to 7.

16. A computer program product, comprising a computer program, the computer program, when executed by a processor, implementing the asset risk assessment method according to any of claims 1 to 7.
